# EUROPÄISCHE PATENTSCHRIFT

(11) **EP 2 630 385 B1**
(45) Veröffentlichungstag und Bekanntmachung des Hinweises auf die Patenterteilung: **27.04.2016**
(21) Anmeldenummer: 11813757.9
(22) Anmeldetag: 18.10.2011
(51) Int. Cl.: F16D 63/00, B60T 1/06

(54) **PARKSPERRE**
PARKING LOCK
FREIN DE STATIONNEMENT

(30) Priorität: 21.10.2010 DE 102010049172
(43) Veröffentlichungstag der Anmeldung: 28.08.2013
(73) Patentinhaber: Amtek Tekfor Holding GmbH, 77652 Offenburg (DE)
(72) Erfinder: KONSTANZER, Steffen, 79268 Bötzingen (DE)
(86) Internationale Anmeldenummer: PCT/DE2011/001865
(87) Internationale Veröffentlichungsnummer: WO 2012/052003

(56) Entgegenhaltungen:
- EP-A2- 1 035 358
- DE-A1- 1 800 164
- DE-C1- 19 942 362
- US-A1- 2005 178 638

## Beschreibung

Die Erfindung bezieht sich auf eine Parksperre eines Getriebes.

Der Gesetzgeber schreibt für Doppelkupplungs- und Wandlergetriebe eine Parksperre vor, die ein Fahrzeug an einem Hang mit bis zu 30% Steigung sicher in der Parkposition hält. Im Stand der Technik kommt hierfür zumeist eine Parksperre zum Einsatz, wobei ein fest auf der Getriebewelle angebrachtes Parkrad am Außendurchmesser eingearbeitete Taschen aufweist. In diese Taschen rastet beim Parken eine Klinke ein und verspannt damit das Getriebe gegen das Gehäuse. Ein Nachteil besteht darin, dass das Parkrad stets mitbewegt werden muss, was zu Verlusten führt. Weiterhin besteht ein hoher Bedarf an Bauraum.

Dokument US 2005/178638 A1 offenbart eine Parksperre gemäß dem Oberbegriff des Anspruchs 1.

Der Erfindung liegt die Aufgabe zugrunde, eine Parksperre vorzuschlagen, welche die Nachteile des Standes der Technik überwindet.

Die Aufgabe wird erfindungsgemäß dadurch gelöst, dass mindestens eine Getriebewelle vorgesehen ist, dass mindestens ein Getriebegehäuse vorgesehen ist, dass mindestens ein Sperrring vorgesehen ist, wobei der Sperrring axial entlang der Getriebewelle verschiebbar ist, und wobei die Getriebewelle und der Sperrring einander koaxial umgebend relativ zueinander angeordnet sind, dass mindestens ein Steuerring vorgesehen ist, wobei der Steuerring relativ zum Sperrring und relativ zur Getriebewelle axial verschiebbar ist, dass der Steuerring und der Sperrring einander koaxial umgebend relativ zueinander angeordnet sind, dass mindestens eine Bewegung des Steuerrings relativ zum Sperrring axial längs der Getriebewelle eine axiale Bewegung des Sperrrings axial längs der Getriebewelle bewirkt, wobei der Steuerring den Sperrring in einem aktivierten Zustand axial längs der Getriebewelle zu einer vorgebbaren axialen Position längs der Getriebewelle direkt oder zeitlich versetzt verschiebt, dass mindestens die Getriebewelle, das Getriebegehäuse und der Sperrring derartig ausgestaltet und aufeinander abgestimmt sind, dass mindestens in einem aktivierten Zustand des Sperrrings ein Formschluss mindestens zwischen Getriebewelle, Getriebegehäuse und Sperrring besteht. In der Erfindung wird somit ein auf der Getriebewelle beweglicher Sperrring im Falle des Einlegens bzw. Aktivierens der Parksperre axial längs der Getriebewelle verschoben und trägt dann zu einem Formschluss zwischen Getriebewelle und Getriebegehäuse bei, durch welchen die Getriebewelle direkt gegenüber dem Getriebegehäuse fixiert und somit blockiert wird. Zwischen dem Verschieben des Steuerrings und des Sperrrings kann dabei ggf. ein zeitlicher Versatz bestehen.

Eine Ausgestaltung der Erfindung beinhaltet, dass der Sperrring bei zumindest einer axialen Position relativ zur Getriebewelle drehfest gegenüber der Getriebewelle gelagert ist. Der Sperrring ist somit beispielsweise über eine Innenkontur in einer Außenkontur der Getriebewelle geführt oder er gelangt bei der Aktivierung der Parksperre in eine solche drehfeste, aber axial bewegliche Führung.

Eine Ausgestaltung der Erfindung sieht vor, dass das Getriebegehäuse einen Innenraum umfasst, und dass der Sperrring und/oder der Steuerring außerhalb des Innenraums angeordnet sind/ist. Durch diese Ausgestaltung kann der Bauraum des Gehäuses verringert werden.

Eine Ausgestaltung der Erfindung beinhaltet, dass die Getriebewelle, das Getriebegehäuse, der Steuerring und der Sperrring derartig ausgestaltet und aufeinander abgestimmt sind, dass in einem aktivierten Zustand des Sperrrings ein Formschluss zwischen Getriebewelle, Getriebegehäuse, Steuerring und Sperrring besteht. In dieser Ausgestaltung bewirken Sperrring und Steuerring zusammen, dass ein Formschluss erzeugt wird.

Eine Ausgestaltung der Erfindung sieht vor, dass zwischen dem Steuerring und dem Sperrring mindestens ein Federelement angeordnet ist. Ein solches Federelement trägt dazu bei, dass der Steuerring den Sperrring verschiebt.

Eine Ausgestaltung der Erfindung beinhaltet, dass die Getriebewelle mindestens eine Außenkontur aufweist, dass der Sperrring mindestens eine Innenkontur aufweist, und dass die Außenkontur und die Innenkontur aufeinander abgestimmt sind. Die Konturen sind somit derartig ausgestaltet, dass es zu einem Verklemmen zwischen Sperrring und Getriebewelle kommt bzw. dass der Sperrring auf der Getriebewelle geführt bzw. radial drehfest gelagert wird.

Eine Ausgestaltung der Erfindung sieht vor, dass die Getriebewelle über ein Wellenlager in dem Getriebegehäuse gelagert ist.

Eine Ausgestaltung der Erfindung beinhaltet, dass ein Dichtring zum Abdichten zwischen Getriebewelle und Getriebegehäuse vorgesehen ist.

Die Erfindung wird anhand einiger in den Figuren dargestellter Ausführungsbeispiele näher erläutert. Dabei zeigen:
Fig. 1: einen Schnitt durch eine erfindungsgemäße Parksperre im geöffneten Zustand, und
Fig. 2: die Parksperre der Fig. 1 im geschlossenen bzw. aktivierten Zustand.

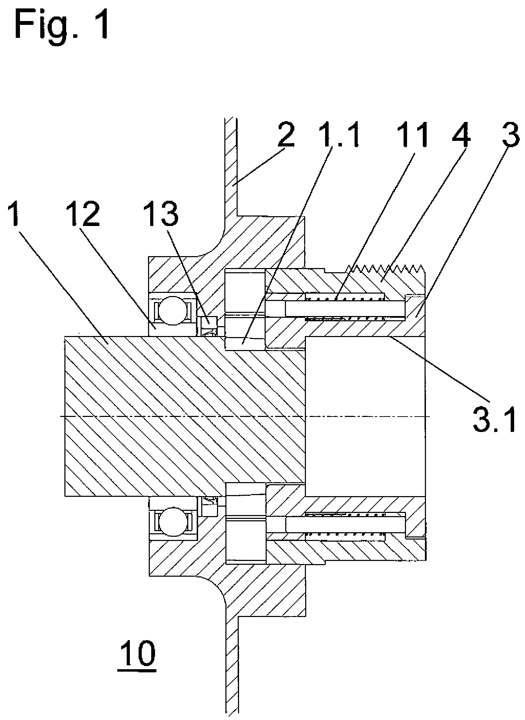

Die Fig. 1 zeigt einen Schnitt durch einen Teil des Getriebegehäuses 2. Vom eigentlichen Getriebe ist nur ein Abschnitt der Getriebewelle 1 zu sehen, auf welcher sich die - hier nicht dargestellten - Getrieberäder befinden und welche über ein Wellenlager 12 im Getriebegehäuse 2 gelagert ist. Das Getriebegehäuse 2 umschließt den Innenraum 10. Der Übergang zwischen der Getriebewelle 1 und dem Getriebegehäuse 2 ist in dieser Ausgestaltung durch einen Dichtring 13 abgedichtet. Auf dem aus dem Innenraum 10 herausragenden Ende der Getriebewelle 1 ist der axial bewegliche und drehfest gelagerte Sperrring 3 angeordnet. Die Außenkontur 1.1 der Getriebewelle 1 und die Innenkontur 3.1 des Sperrrings 3 sind dabei zueinander passend ausgestaltet, z.B. durch passende Erhöhungen, Rillen und Aussparungen bzw. Vertiefungen. Der Sperrring 3 kann entweder einstückig oder mehrteilig aufgebaut sein. Hier ist die einstückige Variante dargestellt. Koaxial um den Sperrring 3 ist ein Steuerring 4 angeordnet, welcher ebenfalls axial verschiebbar ist. Hierfür ist vorzugsweise eine - hier nicht dargestellte - Vorrichtung vorgesehen, welche hier beispielsweise in die gerasterte Außenkontur des Steuerrings 4 eingreift. Zwischen dem Steuerring 4 und dem Sperrring 3 ist ein Federelement 11 vorgesehen, dessen Federkraft längs der Achse der Getriebewelle 1 wirkt.

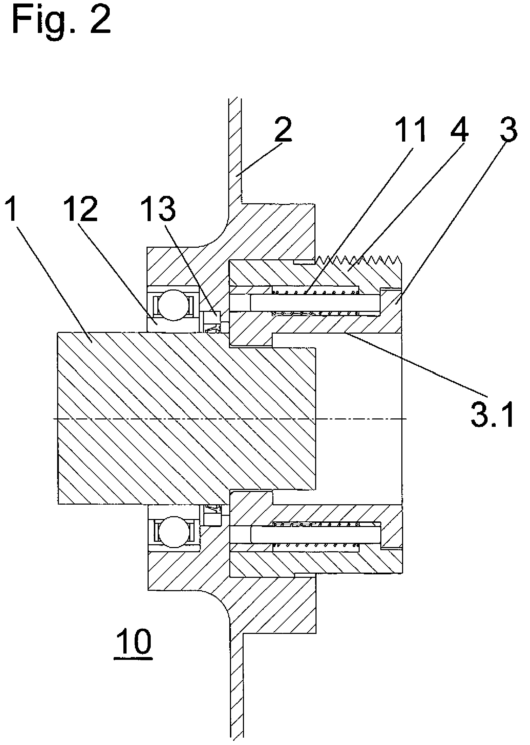

Dargestellt ist in der Fig. 1 der Fall, dass die Parksperre nicht aktiviert ist. Da zwischen dem Sperrring 3 und der Getriebewelle 1 in diesem nicht-aktivierten Zustand ein ausreichendes Spiel besteht, dreht sich die Getriebewelle 1 ohne Beeinflussung durch die Bauteile der Parksperre. Wird die Parksperre aktiviert, so wird der Steuerring 4 in dieser beispielhaften Ausgestaltung in Richtung auf das Getriebegehäuse 2 verschoben, wodurch das Federelement 11 angespannt wird. Der Steuerring 4 kann insbesondere jederzeit und in jeder Stellung verfahren werden. In dieser Ausgestaltung verschiebt sich der Sperrring 3 bei entsprechender Stellung der Formelemente und bedingt durch das Federelement 11 ebenfalls in Richtung auf das Getriebegehäuse 2, bis er dort zum Anschlag gelangt. Dieser aktivierte Zustand ist in der Fig. 2 gezeigt.

In der Fig. 2 befinden sich der Sperrring 3 und der Steuerring 4 - drehfest fixiert - zwischen der Getriebewelle 1 und dem Getriebegehäuse 2 und bilden dort einen Formschluss. Dieser Formschluss verbindet die Getriebewelle 1 mit dem Getriebegehäuse 2 und verhindert ein Drehen der Getriebewelle 1 gegenüber dem Getriebegehäuse 2.

## Patentansprüche

1. Parksperre eines Getriebes, wobei mindestens eine Getriebewelle (1) vorgesehen ist, mindestens ein Getriebegehäuse (2) vorgesehen ist, mindestens ein Sperrring (3) vorgesehen ist, **dadurch gekennzeichnet, dass** der Sperrring (3) axial entlang der Getriebewelle verschiebbar ist, und dass die Getriebewelle (1) der Sperrring (3) einander koaxial umgebend relativ zueinander angeordnet sind,
dass mindestens ein Steuerring (4) vorgesehen ist, wobei der Steuerring (4) relativ zum Sperrring (3) und relativ zur Getriebewelle (1) axial verschiebbar ist,
dass der Steuerring (3) und der Sperrring (3) einander koaxial umgebend relativ zueinander angeordnet sind,
dass mindestens eine Bewegung des Steuerrings (4) relativ zum Sperrring (3) axial längs der Getriebewelle (1) eine axiale Bewegung des Sperrrings (3) axial längs der Getriebewelle (1) bewirkt,
wobei der Steuerring (4) den Sperrring (3) in einem aktivierten Zustand axial längs der Getriebewelle (1) zu einer vorgebbaren axialen Position längs der Getriebewelle (1) direkt oder zeitlich versetzt verschiebt, dass mindestens die Getriebewelle (1), das Getriebegehäuse (2) und der Sperrring (3) derartig ausgestaltet und aufeinander abgestimmt sind, dass mindestens in einem aktivierten Zustand des Sperrrings (3) ein Formschluss mindestens zwischen Getriebewelle (1), Getriebegehäuse (2) und Sperrring (3) besteht.

2. Parksperre nach Anspruch 1,
**dadurch gekennzeichnet,**
**dass** der Sperrring (3)
bei zumindest einer axialen Position relativ zur Getriebewelle drehfest gegenüber der Getriebewelle gelagert ist.

3. Parksperre nach Anspruch 1 oder 2,
**dadurch gekennzeichnet,**
**dass** das Getriebegehäuse einen Innenraum umfasst,
und **dass** der Sperrring und/oder der Steuerring außerhalb des Innenraums angeordnet sind/ist.

4. Parksperre nach einem der Ansprüche 1 bis 3,
**dadurch gekennzeichnet,**
**dass** die Getriebewelle, das Getriebegehäuse, der Steuerring und der Sperrring derartig ausgestaltet und aufeinander abgestimmt sind, dass in einem aktivierten Zustand des Sperrrings ein Formschluss zwischen Getriebewelle, Getriebegehäuse, Steuerring und Sperrring besteht.

5. Parksperre nach einem der Ansprüche 1 bis 4,
**dadurch gekennzeichnet,**
**dass** zwischen dem Steuerring und dem Sperrring mindestens ein Federelement angeordnet ist.

6. Parksperre nach einem der Ansprüche 1 bis 5,
**dadurch gekennzeichnet,**
**dass** die Getriebewelle mindestens eine Außenkontur aufweist,
**dass** der Sperrring mindestens eine Innenkontur aufweist,
und **dass** die Außenkontur und die Innenkontur aufeinander abgestimmt sind.

7. Parksperre nach einem der Ansprüche 1 bis 6,
**dadurch gekennzeichnet,**
**dass** die Getriebewelle über ein Wellenlager in dem Getriebegehäuse gelagert ist.

## Claims

1. A parking lock device of a gearbox,
comprising
at least one gearbox shaft (1);
at least one gearbox housing (2); and
at least one locking ring (3);
wherein the locking ring (3)
is configured to be displaceable axially along the gearbox shaft, and
the gearbox shaft (1) and the locking ring (3) are arranged coaxially encircling relative to each other, and
at least one control ring (4),
the control ring (4) is axially displaceable relative to the locking ring (3) and relative to the gearbox shaft (1),
the control ring (3) and the locking ring (3)
are concentrically arranged relative to each other,
at least one movement of the control ring (4)
relative to the locking ring (3) axially
along the gearbox shaft (1)
causes an axial movement of the locking ring (3) along the
gearbox shaft,
the control ring (4) axially displaces the locking ring (3)
directly or offset in time along the gearbox shaft (1) in an activated condition at a predetermined axial position along the gearbox shaft (1), and
that at least the gearbox shaft (1), the gearbox housing (2) and the locking ring are configured and tailored to each other in such a way that, in an activated condition of the locking ring (3), there is a positive engagement between at least the gearbox shaft (1), the gearbox housing (2) and the locking ring (3).

2. The parking lock device as claimed in claim 1, wherein
in at least one axial position relative to the gearbox shaft, the locking ring (3) is rotationally fixed relative to the gearbox shaft.

3. The parking lock device as claimed in claim 1 or 2,
**wherein**
the gearbox housing has an interior space,
and that the locking ring and/or the control ring are arranged outside the interior space.

4. The parking lock device as claimed in one of the claims 1 to 3,
**wherein**
the gearbox shaft, the gearbox housing, the control ring and the locking ring being designed and adapted to each other in such a way that, in an activated condition of the locking ring, there is a positive engagement between the gearbox shaft, the gearbox housing, control ring and the locking ring.

5. The parking lock device as claimed in one of the claims 1 to 4,
**wherein**
at least one spring element is arranged between the control ring and the locking ring.

6. The parking lock device as claimed in one of the claims 1 to 5,
**wherein**
the gearbox shaft has at least one outer contour,
the locking ring has at least one inner contour,
and the outer contour and the inner contour are adapted to each other.

7. The parking lock device as claimed in one of the claims 1 to 6,
**wherein**
the gearbox shaft is mounted in the gearbox housing by a shaft bearing.

## Revendications

1. Frein de stationnement d'une boîte de vitesses,
un arbre de boîte de vitesses (1) au moins étant prévu, un carter boîte de vitesses (2) au moins étant prévu, une bague de blocage au moins étant prévue,
**caractérisé en ce que** la bague de blocage (3) est déplaçable axialement le long de l'arbre de boîte de vitesses et
que l'arbre de boîte de vitesses (1) et la bague de blocage (3) sont placés coaxialement l'un par rapport à l'autre et se chevauchent l'un par rapport à l'autre,
une bague de commande (4) au moins est prévue,
la bague de commande (4) étant déplaçable axialement par rapport à la bague de blocage (3) et par rapport à l'arbre de boîte de vitesses (1),
la bague de commande (3) et la bague de blocage (3) étant placées coaxialement l'une par rapport à l'autre et se chevauchant l'une par rapport à l'autre,
au moins un mouvement de la bague de commande (4) par rapport à la bague de blocage (3), axialement le long de l'arbre de boîte de vitesses (1), donnant lieu à un mouvement axial de la bague de blocage (3) axialement le long de l'arbre de boîte de vitesses (1),
la bague de commande (4) déplaçant directement ou de façon décalée dans le temps la bague de blocage (3) dans un état activé, axialement le long de l'arbre de boîte de vitesses (1), vers une position axiale définissable, le long de l'arbre de boîte de vitesses (1),
l'arbre de boîte de vitesses (1), le carter boîte de vitesses (2) et la bague de blocage (3) étant configurés et adaptés entre eux de sorte que, au moins dans un état activé de la bague de blocage (3), il existe une liaison mécanique positive au moins entre l'arbre de boîte de vitesses (1), le carter de boîte de vitesses (2) et la bague de blocage (3)

2. Frein de stationnement selon
revendication 1, **caractérisé en ce que**
la bague de blocage (3)
est montée non rotative par rapport à l'arbre de boîte de vitesses, dans au moins une position axiale par rapport à l'arbre de boîte de vitesses.

3. Frein de stationnement selon revendication 1 ou 2,
**caractérisé en ce que**
le carter boîte de vitesses entoure une zone intérieure,
et que la bague de blocage et/ou la bague de commande est placée/sont placées en dehors de la zone intérieure.

4. Frein de stationnement selon l'une des revendications 1 à 3,
**caractérisé en ce que**
l'arbre de boîte de vitesses, le carter boîte de vitesses, la bague de commande et la
bague de blocage sont configurés et adaptés entre eux de sorte que, dans un état activé de la bague de blocage, il existe une liaison mécanique positive entre l'arbre de boîte de vitesses, le carter boîte de vitesses, la bague de commande et la bague de blocage.

5. Frein de stationnement selon l'une des revendications 1 à 4,
**caractérisé en ce que**
un élément de ressort au moins est placé entre la bague de commande et
la bague de blocage.

6. Frein de stationnement selon l'une des revendications 1 à 5,
**caractérisé en ce que**
l'arbre de boîte de vitesses présente au moins un contour extérieur,
la bague de blocage présente au moins un contour intérieur,
et que le contour extérieur et le contour intérieur sont adaptés entre eux.

7. Frein de stationnement selon l'une des revendications 1 à 6,
**caractérisé en ce que**
l'arbre de boîte de vitesses est monté dans le carter boîte de vitesses par l'intermédiaire d'un palier d'arbre.
